# EUROPEAN PATENT APPLICATION

(11) **EP 2 647 490 A1**
(43) Date of publication of application: **09.10.2013**
(21) Application number: 11844284.7
(22) Date of filing: 25.11.2011
(51) Int. Cl.: B29C 65/46, B32B 15/08, B32B 37/16

(54) **METHOD FOR PRODUCTION OF JOINT MEMBER FOR CARBON FIBER COMPOSITE MATERIAL**

(30) Priority: 30.11.2010 JP 2010266544
(71) Applicant: Teijin Limited, Osaka-shi, Osaka 541-0054 (JP)
(72) Inventor: TAKEUCHI, Masaki, Gotemba-shi Shizuoka 412-0048 (JP); KANEKO, Toru, Gotemba-shi Shizuoka 412-0048 (JP)
(74) Representative: Hallybone, Huw George
(86) International application number: PCT/JP2011/077886
(87) International publication number: WO 2012/074083

(57) **Abstract**

A method for producing a joint member between a carbon fiber composite material containing a thermoplastic resin as a matrix and a metal, includes: forming a layer containing a triazine thiol derivative on a surface of the metal; providing a thermoplastic resin layer between the layer containing the triazine thiol derivative and the carbon fiber composite material; and melting the thermoplastic resin layer to join the metal to the carbon fiber composite material.

## Description

### Technical Field

The present invention relates to a method for producing a joint member between a carbon fiber composite material and a metal.

### Background Art

A carbon fiber composite material has high specific strength and specific rigidity and is valued as an extremely excellent material. However, in joining a conventional carbon fiber composite material using a thermosetting resin as a matrix to a different kind of a member, particularly a metal, those are jointed using bolt/nut, a rivet or the like that are mechanical joints, or an adhesive. The mechanical joint by bolt/nut or the like generally involves increase in weight. Particularly, there is a concern that in a composite material, stress concentrates in a joint point, and in the worst case fracture continuously proceeds starting from the first stress concentrated point. In the joint using an adhesive, an adhesive layer having a certain thickness must be generally secured in order to secure strength. Particularly, in the case of joining a large-sized member, a considerably amount of the adhesive is required. As a result, there is a concern in great increase in weight of the member obtained, and additionally, there is a defect that its strength is not always sufficient with only the adhesive. Furthermore, because much time is required until the adhesive develops generally practical strength, an aging step must be taken into consideration. On the other hand, in a carbon fiber composite material using a thermoplastic resin as a matrix (hereinafter sometimes referred to as a "thermoplastic carbon fiber composite material"), materials are joined to each other by welding in a range that resins are compatible, and joint strength comparable to the matrix resin can be expected. However, there are many cases that the joint to a metal by welding is difficult even in the thermoplastic carbon fiber composite material.

To weld the thermoplastic carbon fiber composite material to a metal, it is required that the thermoplastic resin itself used as a matrix can weld to a metal.

Patent Document 1 describes that the reason that a metal and a resin can be joined by welding is due to an anchor effect by injection-molding a resin to an aluminum material having finely porous surface. Patent Documents 2 and 3 describe that a resin and a metal are joined by applying a treatment to a metal surface.

Furthermore, Patent Document 4 describes a joining method by providing an intermediate resin layer having an affinity with both a thermosetting carbon fiber composite material and a metal.
Patent Document 1: JP-A-2003-103563
Patent Document 2: JP-B-5-51671
Patent Document 3: WO2009/157445 pamphlet
Patent Document 4: JP-A-2006-297927

### Disclosure of the Invention

### Problems that the Invention is to Solve

An object of the present invention is to provide a method for producing a joint member between a carbon fiber composite material containing a resin as a matrix and a metal, and particularly to provide a method for producing a joint member between a carbon fiber composite material containing a thermoplastic resin as a matrix and a metal, characterized in that joint and molding can be conducted simultaneously.

The advantage of a thermoplastic carbon fiber composite material is that its shape easily changes by applying heat, and due to this, injection- or press-molding can be conducted in an extremely short period of time as compared with a thermosetting carbon fiber composite material. Therefore, if a carbon fiber composite material containing a thermoplastic resin as a matrix is used and the joint can be extremely easily performed by thermo-compression bonding in a mold simultaneously with the molding or just after the molding, a joint body with a metal material can be obtained extremely efficiently. However, even though the thermoplastic carbon fiber composite material is tried to join to a metal by the joining method of a thermoplastic resin and a metal as described in Patent Documents 2 and 3, the thermoplastic carbon fiber composite material is that a thermoplastic resin is in a state of "soaking into" a carbon fiber bundle. Thus, the resin is not always homogeneously present on the surface of the material, and in some cases, a "deficient" portion of a resin is present. Therefore, there was a concern that sufficient joint strength is not developed and joint strength shows great variations. Furthermore, the carbon fiber causes a so-called electrolytic corrosion to a metal. Therefore, when the carbon fiber has been brought into contact with a metal in a portion where the resin has been deficient, the contact has caused the corrosion of a metal.

### Means for Solving the Problems

As a result of intensive investigations on the joint between a thermoplastic carbon fiber composite material and a metal, the present inventors have found that the metal and the thermoplastic carbon fiber composite material can be joined strongly and stably by forming a layer containing a triazine thiol derivative on the surface of the metal, providing a thermoplastic resin layer between the layer containing the triazine thiol derivative and the thermoplastic carbon fiber composite material, and melting the thermoplastic resin layer, thereby joining the metal to the carbon fiber composite material, and have reached the present invention. The constitution of the present invention is described below.
1. A method for producing a joint member between a carbon fiber composite material containing a thermoplastic resin as a matrix and a metal, the method comprising forming a layer containing a triazine thiol derivative on a surface of the metal, providing a thermoplastic resin layer between the layer containing the triazine thiol derivative and the carbon fiber composite material, and melting the thermoplastic resin layer to join the metal to the carbon fiber composite material.
2. The method for producing a joint member as described in item 1 above, wherein the metal is heated to be joined by means of electromagnetic induction.
3. The method for producing a joint member as described in any one of items 1 to 2 above, wherein the thermoplastic resin layer has a thickness of from 5 µm to 5 mm.
4. The method for producing a joint member as described in any one of items 1 to 3 above, wherein an element constituting the metal mainly comprises iron or aluminum.
5. The method for producing a joint member as described in any one of items 1 to 4 above, wherein an amount of the thermoplastic resin present in the carbon fiber composite material is from 50 to 1,000 parts by weight per 100 parts by weight of the carbon fiber.
6. A joint member comprising a thermoplastic carbon fiber composite material and a metal that are joined in joint strength of 5 MPa or more, obtained by the production method of any one of items 1 to 5 above.
7. A method for producing a metal composite molded body comprising a carbon fiber composite material containing a thermoplastic resin as a matrix and a metal, that are joined, the method comprising forming a layer containing a triazine thiol derivative on a surface of the metal, and melting a thermoplastic layer provided between the layer containing the triazine thiol derivative and the carbon fiber composite material to simultaneously or continuously conduct joint between the metal and the carbon fiber composite material, and molding thereof.

### Advantages of the Invention

According to the present invention, a thermoplastic carbon fiber composite material and a metal can be joined strongly and stably by a simplified method. Furthermore, by joining the thermoplastic carbon fiber composite material to the metal through a thermoplastic resin, electrolytic corrosion caused by carbon fiber can be simultaneously prevented. Additionally, a joint member between the carbon fiber composite material and the metal can be obtained in a short period of time and in less number of steps by simultaneously or continuously conducting joint and molding steps.

### Brief Description of the Drawings

Fig. 1 is a schematic view showing one embodiment of the joint member of the present invention.
Fig. 2 is a schematic view showing the shape of the molded body obtained in Example 5.
Fig. 3 is a schematic view showing the shape of the metal composite molded body obtained in Example 5. In the drawing, a circular SPCC sheet was shown by an oblique line.

### Description of Reference Numerals

- 1: Thermoplastic carbon fiber composite material
- 2: Thermoplastic resin layer
- 3: Layer containing a triazine thiol derivative
- 4: Metal

### Best Mode for Carrying out the Invention

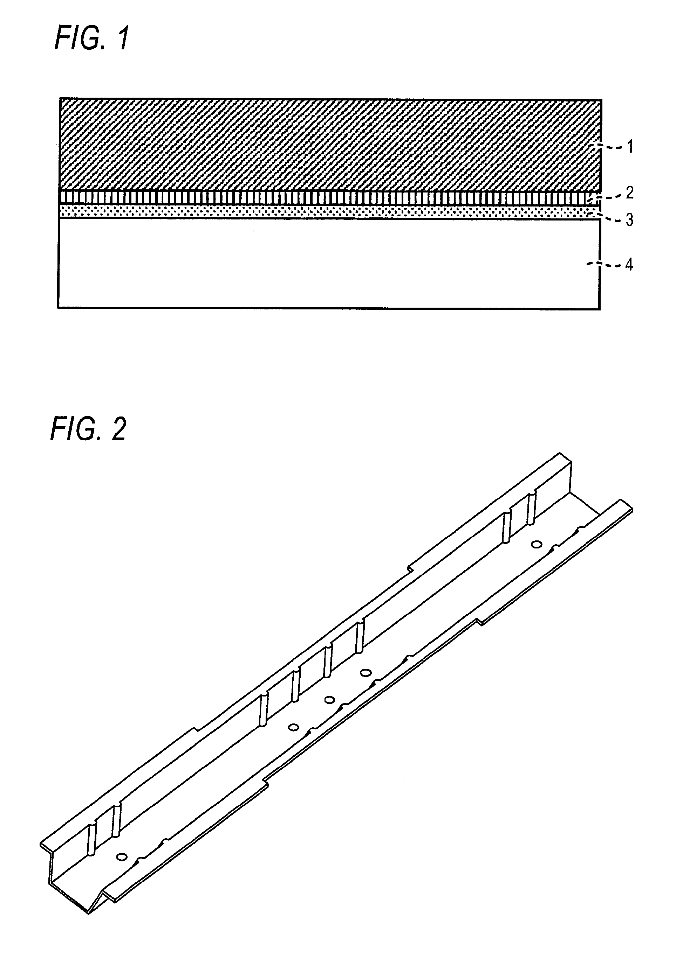

The present invention relates to a method for producing a joint member between a carbon fiber composite material containing a thermoplastic resin as a matrix and a metal. One embodiment of the joint member of the present invention is shown in Fig. 1, and an embodiment of the present invention is described below.

### [Thermoplastic carbon fiber composite material]

The thermoplastic carbon fiber composite material used in the present invention is a material containing a thermoplastic resin as a matrix, and a carbon fiber. The thermoplastic carbon fiber composite material preferably contains the thermoplastic resin in an amount of from 50 to 1,000 parts by weight per 100 parts by weight of the carbon fiber. More preferably, the amount of the thermoplastic resin is from 50 to 400 parts by weight per 100 parts by weight of the carbon fiber. Still more preferably, the amount of the thermoplastic resin is from 50 to 100 parts by weight per 100 parts by weight of the carbon fiber. Where the amount of the thermoplastic resin is less than 50 parts by weight per 100 parts by weight of the carbon fiber, dry carbon fiber in the composite material may be increased. On the other hand, where the amount exceeds 1,000 parts by weight, the amount of the carbon fiber is too small, and the carbon fiber may become inappropriate as a structural material.

Examples of the thermoplastic resin include polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin and ABS resin. Particularly, from the balance between costs and properties, at least one selected from the group consisting of polyamide, polypropylene, polycarbonate and polyphenylene sulfide is preferred. As the polyamide (sometimes abbreviated as PA, and sometimes called nylon), at least one selected from the group consisting of PA6 (called polycaproamide or polycaprolactam, and more accurately, poly ε-caprolactam), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecamide), PA612 (polyhexamethylene dodecamide), PA11 (polyundecane amide), PA12 (polydodecane amide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephtalamide), PA12I (polydodecamethylene isophthalamide) and polyamide MXD6 (polymetaxylene adipamide) is preferred.

The form of the carbon fiber in the thermoplastic carbon fiber composite material is not particularly limited. A woven fabric comprising continuous fibers or a fabric having fibers arranged in one direction may be used. In the case of arranging the fibers in one direction, the fiber layers are stacked in a multilayer by changing the direction of layers. For example, the layers can be alternately stacked. Furthermore, it is preferred that the stacking face is arranged symmetrically to a thickness direction.

In the thermoplastic carbon fiber composite material, discontinuous carbon fibers may be dispersed and arranged so as to overlap. In this case, a fiber length is preferably from 5 to 100 mm. In the case of the discontinuous carbon fibers, the carbon fibers may be present in the state of carbon fiber bundle in the composite material, and it is preferred that the carbon fiber bundle and single fiber are intermingled. It is also preferred that the discontinuous carbon fibers are arranged two-dimensional-randomly in the composite material.

As the thermoplastic carbon fiber composite material, long-fiber pellets, that is, pellets obtained by a step of adjusting a molten resin to a viscosity, impregnating carbon fiber of continuous fiber with the molten resin, and then cutting may be used, and molded into a shape by an injection molding machine.

### [Metal]

Examples of the metal used in the present invention specifically include metals such as iron, stainless steel, aluminum, copper, brass, nickel and zinc. It is preferred that the element constituting the metal mainly comprises iron or aluminum. The term "mainly" used herein means 90% by weight or more. Particularly, iron such as SS steel, SPCC steel or high tensile steel, stainless steel such as SUS304 or 316, aluminum of #1000-700, and its alloy are preferably used.

The shape of the metal to be joined is not particularly limited, and can be appropriately selected according to the desired joint member.

### [Layer containing triazine thiol derivative]

The layer containing a triazine thiol derivative is formed on the surface to be joined of a metal, and is used for joining. The layer containing a triazine thiol derivative is not required to be formed on the entire surface to be joined of the metal, and its thickness is not particularly limited so long as adhesiveness is secured. Preferred examples of the triazine thiol derivative include dehydrated silanol-containing triazine thiol derivative to which chemical bonding to a metal can be expected, and an alkoxysilane-containing triazine thiol derivative.

The alkoxysilane-containing triazine thiol derivative is preferably at least one selected from the group consisting of compounds represented by the following general formulae (1) and (2): 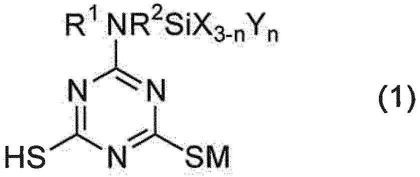 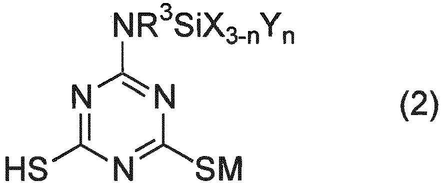 (In the above general formulae (1) and (2), R¹ is any one of H-, CH₃-, C₂H₅-, CH₂=CHCH₂-, C₄H₉-, C₆H₅- and C₆H₁₃-. R² is any one of -CH₂CH₂-, -CH₂CH₂CH₂-, -CH₂CH₂CH₂CH₂CH₂CH₂-, -CH₂CH₂SCH₂CH₂- and -CH₂CH₂NHCH₂cH₂CH₂-. R³ is -(CH₂CH₂)₂CHOCONHCH₂CH₂CH₂- or -(CH₂CH₂)₂N-CH₂CH₂CH₂-, and in this case, N and R³ form a cyclic structure.

In the above general formulae (1) and (2), X is any one of CH₃-, C₂H₅-, n-C₃H₇-, i-C₃H₇-, n-C₄H₉-, i-C₄H₉-, t-C₄H₉- and C₆H₅-, Y is any one of CH₃O-, C₂H₅O-, n-C₃H₇O-, i-C₃H₇O-, n-C₄H₉O-, i-C₄H₉O-, t-C₄H₉O- and C₆H₅O-, n is any one of 1, 2 and 3, and M is -H or an alkali mental.), and
the following general formula (3): 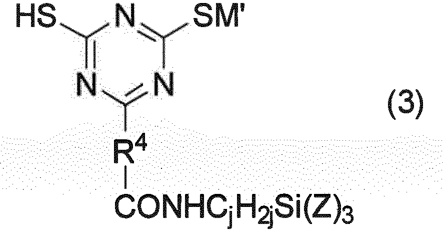 (In the above general formula (3), R⁴ is -S-, -O-, -NHCH₂C₆H₄O-, -NHC₆H₄O-, -NHC₆H₃(Cl)O-, -NHCH₂C₆H₃(NO₂)O-, -NHC₆H₃(NO₂)O-, -NHC₆H₃(CN)O-, -NHC₆H₂(NO₂)₂O-, -NHC₆H₃(COOCH₃)O-, -NHC₁₀H₆O-, -NHC₁₀H₅(NO₂)O-, -NHC₁₀H₄(NO₂)₂O-, -NHC₆H₄S-, -NHC₆H₃(Cl)S-, -NHCH₂C₆H₃(NO₂)S-, -NHC₆H₃(NO₂)S-, -NHC₆H₃(CN)S-, -NHC₆H₂(NO₂)₂S-, -NHC₆H₃(COOCH₃)S-, -NC₁₀H₆S-, -NHC₁₀H₅(NO₂)S- and -NHC₁₀H₄(NO₂)₂S-, M' is -H or an alkali metal, Z is an alkoxy group, and preferably an alkoxy group having from 1 to 4 carbon atoms, and j is an integer of from 1 to 6.).

In the above general formulae (1) to (3), the alkali metal is at least one selected from the group consisting of lithium, sodium, potassium, rubidium and cesium.

Preferred example of the triazine thiol derivative used in the present invention specifically includes the following monosodium triethoxysilylpropylaminotriazine thiol that is an alkoxysilane-containing triazine thiol derivative showing excellent effect.

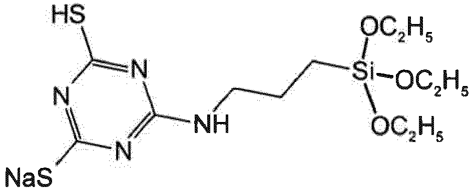

Preferred examples of the method for forming the layer containing a triazine thiol derivative includes the method described in W02009/157445, pamphlet. Specifically, a method of dipping in alkoxysilane-containing triazine thiol, water and ethanol solution, pulling out, subjecting to heat treatment, completing reaction and drying is exemplified. The layer containing a triazine thiol derivative may contain substances other than the triazine derivative in a range that the object of the present invention is not impaired.

### [Metal compound layer]

A metal compound layer such as a hydroxide, a carbonate, a phosphate or a sulfate may be formed between the layer containing a triazine thiol derivative and the metal, and the formation can expect further enhancement in joint strength, which is preferred. The method for forming the metal compound layer preferably includes the method described in WO2009/157445, and specifically includes a method of dipping in an acid such as hydrochloric acid, sulfuric acid or phosphoric acid.

### [Thermoplastic resin layer]

The present invention is characterized in that the thermoplastic resin layer is provided between the thermoplastic carbon fiber composite material and the layer containing a triazine thiol derivative provided on the metal, and the thermoplastic resin layer is melted, thereby joining the metal to the carbon fiber composite material. The thermoplastic resin layer is not required to be provided on the entire surface to be joined, so long as adhesiveness is secured. The thermoplastic resin layer is arranged in a film form, a woven fabric form, a non-woven fabric form or a powder form, and heat and pressure are applied to melt the thermoplastic resin to such an extent that fibers of the thermoplastic carbon fiber composite material can be impregnated with the thermoplastic resin, thereby joining the metal to the carbon fiber composite material.

The thermoplastic resin constituting the thermoplastic resin layer is preferably a resin that is compatible with the matrix resin of the thermoplastic carbon fiber composite material, and preferably includes the same resin as the matrix resin constituting the thermoplastic carbon fiber composite material. More preferably, the thermoplastic resin constituting the thermoplastic resin layer and the thermoplastic resin constituting the thermoplastic carbon fiber composite material are the same kind of resins. The preferred examples of the thermoplastic resin constituting the thermoplastic resin layer include the same resins as described in the thermoplastic resin constituting the thermoplastic carbon fiber composite material.

The thermoplastic resin layer has a thickness of preferably from 5 µm to 5 mm, more preferably from 20 µm to 4 mm, and still more preferably from 40 µm to 3 mm. Where the thickness of the resin layer is less than 5 µm, a resin necessary for welding becomes insuffcient, and there is a case that sufficient strength is not obtained. Where the thickness of the resin layer exceeds 5 mm, moment acts on a joint surface when shear load is applied to both, and strength may be decreased as a whole. By providing the resin layer in a thickness of 5 µm or more, sufficient resin can be supplied when welding, and the carbon fiber can be prevented from contacting with the metal. As a result, prevention of electrolytic corrosion can be expected, which is preferred.

### [Welding method]

In the method for producing a joint member of the present invention, the thermoplastic resin layer is provided between the layer containing a triazine thiol derivative on the surface of the metal and the carbon fiber composite material, and the thermoplastic resin layer is melted, thereby joining the metal firmly to the carbon fiber composite material.

The method for melting a thermoplastic resin layer is preferably a method by heating and pressurizing. The heating method is preferably heat transfer, radiation, and the like by an external heater. The method for heating a metal to be joined by electromagnetic induction is extremely preferred for the reason that a joint surface to a resin can be directly heated. The timing of heating the metal is preferably to match when molding the heated resin, from the standpoint that joint strength is most increased. However, on the step, it is possible to heat the metal after molding, and again pressurizing to join.

The heating temperature is preferably from a melting temperature of the thermoplastic resin constituting the thermoplastic resin layer to a decomposition temperature thereof, and more preferably from (melting temperature + 15°C) to (decomposition temperature - 30°C). The pressuring conditions are that a pressure of from 0.01 to 2 MPa, preferably from 0.02 to 1.5 MPa, and still more preferably from 0.05 to 1 MPa, is applied to the welding surface. Where the pressure is less than 0.01 MPa, good joint strength may not be obtained, and there is a case that the composite material springs back during heating, and the shape cannot be maintained, thereby decreasing material strength. On the other hand, where the pressure exceeds 2 MPa, pressurized part crushes, thereby the shape may be difficult to maintain the shape or material strength may be decreased.

The thermoplastic resin layer provided between the layer containing a triazine thiol derivative and the carbon fiber composite material may be formed by previously adhering the resin layer to any one side of those. In the case of forming the thermoplastic resin layer on any one side, the thermoplastic resin layer is preferably provided by adhesion at the side of the metal layer having the layer containing a triazine thiol derivative formed on the surface thereof. Furthermore, the joint member can be produced by stacking the thermoplastic resin layer and the carbon fiber composite material on the metal layer having the layer containing a triazine thiol derivative attached thereto, and simultaneously thermocompression-bonding the whole.

The temperature of the step of forming the thermoplastic resin layer is more preferably from (melting temperature of thermoplastic resin + 15°C) to (decomposition temperature thereof - 30°C). The thermoplastic resin layer can be arranged by using the thermoplastic resin in a film form, a woven form, a non-woven form or a sheet form and thermocompression-bonding the same, or adhering the molten resin in small thickness by injection molding.

The temperature of the metal when contacting the molten thermoplastic resin is preferably from (melting temperature of thermoplastic resin + 15°C) to (decomposition temperature thereof - 30°C). Where the temperature of the metal is lower than the range, there is a case that the resin is difficult to adapt to the surface. On the other hand, where the temperature exceeds the range, decomposition of the resin may proceed. The time for maintaining the temperature is better to be short as possible if the time for substantially joining the metal to the thermoplastic carbon fiber composite material can be secured. The joint strength between the thermoplastic resin layer and the metal is that affinity by the layer containing a triazine thiol derivative on the surface of the metal is important, and there is generally a concern that the layer containing a triazine thiol derivative modifies by high temperature. For this reason, high temperature in a long period of time is not preferred. As one example, the joint time at 275°C is preferably 10 minutes or shorter.

### [Metal composite molded body]

In the case of joining a carbon fiber composite material containing a thermosetting resin as a matrix to a metal , it has been forced to use of an adhesive or the molding over a long period of time in an autoclave after inserting the metal in a prepreg. The present invention, however, uses the carbon fiber composite material containing a thermoplastic resin as a matrix, and therefore, the joining of the metal can be conducted simultaneously with a molding step such as pressing, or continuously. That is, the present invention includes a method for producing a metal composite molded body in which a carbon fiber composite material and a metal are joined, characterized in that the molding and the joining are simultaneously conducted in a mold.

Accordingly, the present invention also relates to a method for producing a metal composite molded body in which a carbon fiber composite material containing a thermoplastic resin as a matrix and a metal are joined, characterized in that a layer containing a triazine thiol derivative is provided on the surface of the metal, and a thermoplastic resin layer provided between the layer containing a triazine thiol derivative and the carbon fiber composite material is melted, thereby simultaneously or continuously conducting the joining and molding of the metal and the carbon fiber composite material. The molding and joining in the production of the metal composite molded body can be conducted in a short period of time. Therefore, the method of the present invention is an industrially superior method as compared with the case of using the conventional carbon fiber composite material containing a thermosetting resin as a matrix. In the method for producing a metal composite molded body of the present invention, the term "continuously conducting the joining and molding of the metal and the carbon fiber composite material" includes not only an embodiment that the molding is continuously conducted after joining the metal to the carbon fiber composite material, but also an embodiment that after molding the carbon fiber composite material into a desired shape, the metal is continuously joined.

### [Joint member]

The joint member comprising a carbon fiber composite material and a metal that are strongly joined is obtained. Joint strength of the joint member is 5 MPa or more. The joint strength can be evaluated by a tensile test, and the upper limit of the joint strength is substantially about 50 MPa. The joint member and the metal composite molded body, obtained in the present invention are suitably used as a structural member requiring strength. Example of the structural member includes a part constituting a moving vehicle such an automobile. The number of a joint part of the joint member is not limited, and can be optionally selected depending on single lap or double lap, and depending on joint environment. The double lap is that the area becomes two times, and therefore, the joint strength becomes two times.

### Example

The present invention is specifically described below on the basis of examples, but the invention is not limited to those.

Conditions of the measurement of physical properties and the evaluation in each example and comparative example are as follows.

### 1) Joint strength

Five joint members as described in each example were prepared, and a value of a tensile strength obtained by conducting a tensile test in a rate of 1 mm/min by a universal tester INSTRON 5587 was defined as a joint strength of the joint member.

### [Reference Example 1]

### Production of carbon fiber composite material of continuous fiber 0° and 90° alternate stacking materials

Continuous carbon fibers (TENAX STS40-24KS (fiber diameter: 7 µm, tensile strength: 4,000 MPa), manufactured by Toho Tenax Co., Ltd.) were stacked into 64 layers alternately in fiber directions of 0° and 90° while stacking nylon 6 films (UNITIKA EMBLEM ON, 25 µm thick) (carbon fiber: 64 layers, nylon: 65 layers), and the resulting assembly was compressed under heating at 260°C under a pressure of 2 MPa for 20 minutes. Thus, a carbon fiber composite material having 0° and 90° alternate fibers, symmetric stacking, volume ratio of carbon fibers: 47% (content of carbon fibers in mass basis: 57%) and a thickness of 2 mm was prepared.

### [Reference Example 2]

### Production of flat plate carbon fiber composite material comprising random material

Carbon fibers (TENAX STS40, average fiber diameter: 7 µm, manufactured by Toho Tenax Co., Ltd.) cut in an average fiber length of 16 mm were randomly arranged to made a fiber sheet having an average density is 540 g/m², and were sandwiched among 10 cloths of UNITIKA KE 435-POG (nylon 6). The resulting assembly was pressed at 260°C under 2.5 MPa to prepare a flat plate carbon fiber composite material having a carbon fiber volume ratio of 35% (carbon fiber content on the basis of mass: 45%) and a thickness of 2 mm.

### [Metal surface treatment]

A metal sheet having a length of 100 mm, a width of 25 mm and a thickness of 1.6 mm was degreased in a sodium hydroxide aqueous solution having a concentration of 15.0 g/L at a temperature of 60°C for 60 seconds. The metal sheet was then washed with water for 60 seconds and dried in an oven at 80°C for 30 minutes. The metal sheet was dipped in a phosphoric acid aqueous solution (90% or more of components other than water is phosphoric acid) having a concentration of from 30 to 50 g/L for 300 seconds, and then washed with hot water (60°C) for 60 seconds and washed with water for 60 seconds, to form a metal compound coating film comprising a metal phosphate and a hydroxide as main components on the surface of the metal sheet. The metal sheet having the metal compound coating film was dipped in an ethanol/water (volume ratio: 95/5) of monosodium triethoxysilylpropylaminotriazine thiol having a concentration of 0.7 g/L at room temperature for 30 minutes. The metal sheet was heat-treated in an oven at 160°C for 10 minutes. The metal sheet was dipped in an acetone solution containing N,N'-m-phenylenedimaleimide having a concentration of 1.0 g/L and dicumyl peroxide having a concentration of 2 g/L at room temperature for 10 minutes, and heat-treated in an oven at 150°C for 10 minutes. An ethanol solution of dicumyl peroxide having a concentration of 2 g/L was sprayed to the entire surface of the metal sheet at room temperature, and air-dried to provide a triazine thiol derivative layer over the entire surface of the metal sheet.

### [Example 1]

The metal surface treatment described above was applied to both surfaces of SPCC (cold-reduced carbon steel sheet) having a length of 100 mm, a width of 25 mm and a thickness of 1.6 mm, and two nylon 6 films (UNITIKA EMBLEM ON, 25 µm thick, melting point: 225°C) were provided on both surfaces thereof. The SPCC sheet was heated to 250°C by electromagnetic induction heating, and then immediately cooled to ordinary temperature. The nylon films were melted and closely attached, and then solidified to form a layer of nylon 6 on the SPCC surface. The carbon fiber composite material obtained in Reference Example 2 was cut into a length of 100 mm and a width of 25 mm, stacked on the SPCC sheet having the nylon layer in a range of 25 mm × 25 mm by single lap, and pressurized under heating at 250°C under 0.2 MPa for 5 minutes using a mold to prepare a joint member between the thermoplastic carbon fiber composite material and the SPCC sheet. Five joint members were prepared, and subjected to a tensile test in a rate of 1 mm/min by a universal tester INSTRON 5587. As a result, the average value of the joint strength was 12 MPa.

### [Example 2]

The metal surface treatment described above was applied to both surfaces of a 590 MPa category high tensile steel having a length of 100 mm, a width of 25 mm and a thickness of 1.6 mm, two nylon 6 films (UNITILA EMBLEM ON, 25 µm thick) were provided on both surfaces thereof. The high tensile steel was heated to 250°C by electromagnetic induction heating, and then immediately cooled to ordinary temperature. The nylon films were melted, closely attached and solidified to form a layer of nylon 6 on the high tensile steel surface. The flat sheet comprising the random material obtained in Reference Example 2 was cut into a length of 100 mm and a width of 25 mm, stacked on the high tensile steel having the nylon layer in a range of 25 mm × 25 mm by single lap, the thermoplastic carbon fiber composite material was heated at 250°C, and the high tensile steel was heated to 140°C, followed by pressuring under heating under 0.2 MPa for 1 minute using a mold. Subsequently, the high tensile steel in the material lapped was heated to 250°C by electromagnetic induction heating, and pressurized under heating under 0.2 MPa for 1 minute to prepare a joint member between the thermoplastic carbon fiber composite material and the high tensile steel. Five joint members were prepared, and subjected to a tensile test in a rate of 1 mm/min by a universal tester INSTRON 5587. As a result, the average value of the joint strength was 17 MPa.

### [Example 3]

Two nylon 6 films (UNITIKA EMBLEM ON, 25 µm thick) were provided on both surfaces of the SPCC sheet having a length of 100 mm, a width of 25 mm and a thickness of 1.6 mm, which was subjected to the metal surface treatement in the same steps as in Example 1. The carbon fiber composite material obtained in Reference Example 1 was cut into a length of 100 mm and a width of 25 mm, was heated to 250°C, stacked on the SPCC sheet having the nylon 6 layer in a range of 25 mm × 25 mm by single lap, and pressurized under heating together with the SPCC sheet previously heated to 250°C by electromagnetic induction heating under a pressure of 0.2 MPa for 5 minutes using a mold to prepare a joint member between the thermoplastic carbon fiber composite material and the SPCC. Five joint members were prepared, and subjected to a tensile test in a rate of 1 mm/min by a universal tester INSTRON 5587. As a result, the average value of the joint strength was 7.4 MPa.

### [Example 4]

A layer of nylon 6 was formed on the surface of an aluminum sheet in the same manner as in Example 1, except that 5052 aluminum sheet having a thickness of 1 mm was used in place of the SPCC sheet. The flat sheet comprising a random material obtained in Reference Example 2 was cut into a length of 100 mm and a width of 25 mm, and stacked on the aluminum steel having the nylon layer in a range of 25 mm × 25 mm by single lap, followed by pressuring under heating at 250°C under a pressure of 0.2 MPa for 5 minutes using a mold, thereby preparing a joint member between the thermoplastic carbon fiber composite material and the 5052 aluminum sheet. Five joint members were prepared, and subjected to a tensile test in a rate of 1 mm/min by a universal tester INSTRON 5587. As a result, the aluminum sheet part was broken. Calculating from breaking strength of the aluminum sheet, it was seen that the joint strength was 7.1 MPa or more.

### [Comparative Example 1]

The same operation as in Example 1 was conducted, except that the nylon 6 layer was not provided on the SPCC sheet having a length of 100 mm, a width of 25 mm and a thickness of 1.6 having been subjected to metal surface treatment, and in place of the carbon fiber composite material obtained in Reference Example 2, a nylon 6 piece having the same size was joined. However, as a result that it was tried to measure joint strength of the joint member obtained, the nylon 6 piece was broken off.

### [Example 5]

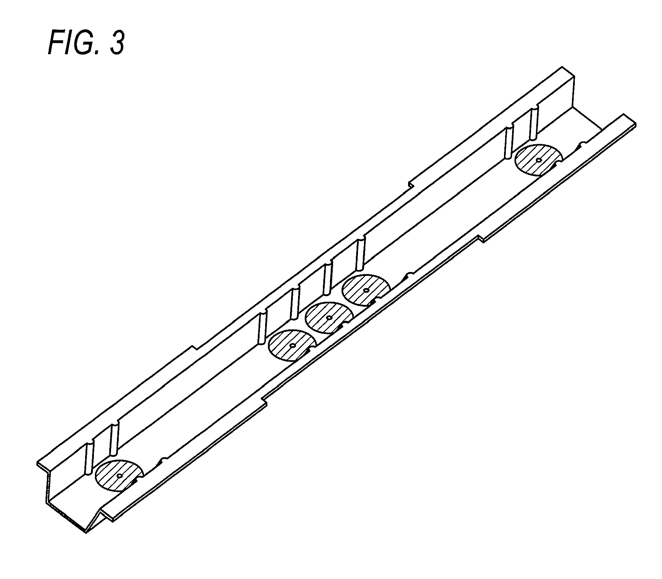

The carbon fiber composite material obtained in Reference Example 1 was heated to 250°C, and pressed under a pressure of 20 MPa using a mold at 140°C to obtain a nearly U-shaped molded body having a length of 1,200 mm, a width of 150 mm and a height of 50 mm as shown in Fig. 2. Five holes having a diameter of 10 mm were formed in the molded body as shown in Fig. 2. The SPCC sheet having a hole having a diameter of 10 mm at the center thereof, and having a diameter of 100 mm and a thickness of 1.6 mm having been subjected to the metal surface treatment in the same steps as in Example 1 was placed on each of five holes through two nylon 6 films (UNITILA EMBLEM ON, 25 µm thick) having the same size. The resulting assembly was heated to 250°C by electromagnetic induction heating, and the SPCC sheet was pressurized until reaching about 100°C by a force of 20 kgf (196N), thereby joining to the molded body. Thus, a metal composite molded body was obtained. The metal composite molded body can be used as a part of a seat rail, and its shape is shown in Fig. 3.

### Industrial Applicability

The joint member of the present invention has excellent joint strength, and can be used in various uses such as a part constituting a moving vehicle such as an automobile.

## Claims

1. A method for producing a joint member between a carbon fiber composite material containing a thermoplastic resin as a matrix and a metal, the method comprising:
forming a layer containing a triazine thiol derivative on a surface of the metal;
providing a thermoplastic resin layer between the layer containing the triazine thiol derivative and the carbon fiber composite material; and
melting the thermoplastic resin layer to join the metal to the carbon fiber composite material.

2. The method for producing a joint member according to claim 1, wherein the metal is heated to be join by means of electromagnetic induction.

3. The method for producing a joint member according to any one of claims 1 to 2, wherein the thermoplastic resin layer has a thickness of from 5 µm to 5 mm.

4. The method for producing a joint member according to any one of claims I to 3, wherein an element constituting the metal mainly comprises iron or aluminum.

5. The method for producing a joint member according to any one of claims 1 to 4, wherein an amount of the thermoplastic resin present in the carbon fiber composite material is from 50 to 1,000 parts by weight per 100 parts by weight of a carbon fiber.

6. A joint member comprising a thermoplastic carbon fiber composite material and a metal that are joined in joint strength of 5 MPa or more, obtained by the production method of any one of claims 1 to 5.

7. A method for producing a metal composite molded body comprising a carbon fiber composite material containing a thermoplastic resin as a matrix and a metal, that are joined, the method comprising forming a layer containing a triazine thiol derivative on a surface of the metal, and melting a thermoplastic layer provided between the layer containing the triazine thiol derivative and the carbon fiber composite material to simultaneously or continuously conduct joint between the metal and the carbon fiber composite material, and molding thereof.
